(19) Europäisches Patentamt
European Patent Office
Office européen des brevets

(11) Publication number: 0 030 151
B1

(12) EUROPEAN PATENT SPECIFICATION

(45) Date of publication of patent specification: 23.11.83

(51) Int. Cl.³: C 01 C 3/02

(21) Application number: 80304311.6

(22) Date of filing: 01.12.80

# (54) Hydrogen cyanide manufacturing process.

(30) Priority: 03.12.79 US 99703

(43) Date of publication of application:
10.06.81 Bulletin 81/23

(45) Publication of the grant of the patent:
23.11.83 Bulletin 83/47

(84) Designated Contracting States:
DE FR GB IT

(56) References cited:
DE - B - 1 077 198
DE - B - 1 206 409
US - A - 1 934 838
US - A - 2 797 148
US - A - 3 104 945
US - A - 3 718 731
US - A - 4 107 278

KATALYSATOREN, TENSIDE und MINERALÖLADDITIVE, J. Falbe & U. Hasserodt, Thieme-Verlag, p.50

(73) Proprietor: E.I. DU PONT DE NEMOURS AND COMPANY
Legal Department 1007 Market Street
Wilmington Delaware 19898 (US)

(72) Inventor: Wang, Victor Kai-Kuo
568 Oldstage Road
East Brunswick New Jersey (US)
Inventor: Yates, Paul Clifford
2120 Shipley Road Oak Lane Manor
Wilmington Delaware (US)

(74) Representative: Woodcraft, David Charles et al,
BROOKES & MARTIN High Holborn House 52/54
High Holborn
London, WC1V 6SE (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 030 151 B1

Courier Press, Leamington Spa, England.

# Hydrogen cyanide manufacturing process

This invention relates to processes for the manufacture of hydrogen cyanide and more particularly to such processes which utilize converter off-gases and supplementary hydrocarbon feedstocks.

Hydrogen cyanide is a versatile chemical useful in the preparation of a wide variety of chemical products. With a continuing rise in cost of hydrocarbon feedstocks useful in its manufacture, it becomes desirable to increase the carbon utilization from feedstock to product.

One commercial process for the manufacture of hydrogen cyanide is the Andrussow process which involves the catalytic reaction of a gaseous hydrocarbon usually methane, ammonia and air using platinum or a platinum alloy typically a platinum-rhodium gauze as the catalyst. This process is described by Andrussow in U.S. Patent 1,934,838 issued November 14, 1933, and by Jenks in U.S. Patent 3,104,945. There have been numerous patents granted over the years relating to improvements in the Andrussow process. Typically, these improvements are directed to increased yields or better recovery of hydrogen cyanide from the reaction gases.

The Andrussow process is uniquely dependent on methane as a raw material. Although a number of patents (e.g., Andrussow, U.S. 1,934,839) disclose the use of higher hydrocarbons, and they can be used for short times in laboratory scale experiments, they are not used industrially because of severe carburization of the platinum-rhodium gauze catalysts. Even a few percent of higher hydrocarbons mixed with 95% or more methane causes rapid carburization. This reduces yields and conversions and, if continued, leads to an actual physical disintegration of the catalyst gauze structures with attendant loss of catalyst. Although minor carburization occurs with pure methane, it is relatively slow; yields and conversions decrease only moderately and the catalyst gauze lasts for several months. Carburization of the catalyst becomes more rapid and severe as large quantities of higher hydrocarbons are substituted for methane in the feed. Thus, when methane supplies are curtailed, or shut off completely, alternative hydrocarbons such as ethane, propane, liquid petroleum gas, gasoline or naphtha cannot now be directly substituted to maintain production of hydrogen cyanide.

A further problem with the Andrussow synthesis is relatively low carbon yield even when the preferred pure methane feedstock is used. The yield loss results from the formation of carbon monoxide and carbon dioxide as byproducts, along with substantial amounts of hydrogen. Carbon yields range from about 60—70% depending on the amount of oxygen and ammonia fed concurrently with the methane. Somewhat improved yields result from using higher ratios of ammonia/methane than the standard 1/1 ratio, but this reduces the yield based on ammonia. It also tends to overload the ammonia recovery and recycle systems which are often the output limiting portions of an Andrussow hydrogen cyanide plant.

Since the theoretical Andrussow reaction is close to an explosive range, i.e.:

$$CH_4+NH_3+1.5O_2 \rightarrow HCN+3H_2O$$

the actual reaction is conducted so as to be lean in oxygen and diluted with nitrogen from air. The resulting reaction off-gases thus contain hydrogen cyanide, unreacted ammonia, nitrogen, carbon monoxide, carbon dioxide, hydrogen and water. After unreacted ammonia is recovered (U.S. Patents 2,797,148, issued June 1957 to Carlson, and 3,718,731, issued February 27, 1973 to Carlson and Hess) and hydrogen cyanide and water condensed from the reaction gases, the resulting waste off-gases composed of the carbon oxides, hydrogen and nitrogen are burned.

It would be desirable, therefore, to recover the carbon and hydrogen values now lost in the Andrussow exit gases and convert these into hydrogen cyanide product without penalizing the ammonia yield or overloading the ammonia recycle system. It would also be desirable to be able to use alternate fuels and hydrocarbon feedstocks during periods of curtailment of natural gas supplies.

According to the present invention there is provided a process for the manufacture of hydrogen cyanide by the Andrussow reaction wherein a feed of methane, ammonia and a source of oxygen is contacted with an oxidation catalyst in a reaction zone and hydrogen cyanide, water and unreacted ammonia are separated from the product gases to give waste off-gas, which is characterized by:—

(1) adjusting the atomic ratios of hydrogen, carbon and oxygen in the off-gas by the addition of a carbon-containing fluid and optionally hydrogen such that H equals 0.9—1.3 of the sum of 4(C)+2(O) where

H=gram atoms of hydrogen from all sources in the adjusted off-gas
C=gram atoms of carbon from all sources in the adjusted off gas
O=gram atoms of oxygen from all sources in the adjusted off-gas;

(2) contacting the adjusted off-gas with a methanation catalyst so as to convert the carbon contained therein substantially completely to methane;

(3) condensing and removing water formed;

(4) mixing the methanated off-gas with ammonia, oxygen and additional methane, if needed, to reconstitute the original feed and passing the resulting gas to the reaction zone, the off-gas being purged periodically to avoid excessive build-up of nitrogen in the Andrussow reaction feed.

The present invention allows the use of hydrocarbon off-gases from the Andrussow process to be used with supplementary hydrocarbons feedstock to prepare additional methane for the process. In the event of a reduction in the supply of methane, the art Andrussow process must either be reduced correspondingly or shut down. By practicing the present invention, other hydrocarbon feedstocks can be used by keeping the process going until methane supply is restored.

According to the present invention, a small amount of off-gas should be purged each cycle to remove essentially all nitrogen formed by side reactions such as the thermal cracking of ammonia to hydrogen and nitrogen or ammonia oxidation to nitrogen plus water. Unless removed by purging, the nitrogen and total gas volume will increase with each recycle stage. The amount to be purged can be calculated by:

$$\begin{bmatrix}\text{moles of off-gas to}\\ \text{be purged per pass}\end{bmatrix} = \frac{[\text{moles of } N_2 \text{ in off-gas}]-[\text{moles of } N_2 \text{ in feed gas}]}{[\text{mole fraction of } N_2 \text{ in off-gas}]}$$

Since the waste off-gases are rich in hydrogen, a carbon-containing fluid must usually be added to the off-gases in order to adjust the molar ratio of carbon to hydrogen. Useful carbon-containing fluids are carbon oxides (carbon monoxide, carbon dioxide or a mixture of the two), synthesis gas, an alkanol of 1—4 carbon atoms, particularly methanol, and a hydrocarbon of 2—10 carbon atoms, particularly olefins such as ethylene or propylene, and volatile hydrocarbons such as naphtha, propane and liquified petroleum gas. Methanol and naphtha are most preferred. Any easily volatilized carbon source can be used which is free of catalyst poison. Certain material can poison the catalyst. The carbon source should not contain more than 1.5% benzene, 0.5 ppm of hydrogen disulfide, 2 ppm of mercaptans, 5% water, 20% carbon dioxide or 1% of ammonia, phenol or hydrogen cyanide.

The required adjustment of the ratio of hydrogen to carbon and oxygen prior to methanation can be calculated as indicated below. Let:

$C_a$=gram atoms of carbon to be added as a supplementary source of carbon,

$C_f$=gram atoms of carbon desired in feed,

$C_e$=gram atoms of carbon in retained off-gas after purging.

Then $C_a=C_f-C_e$.

Following addition of the supplemental carbon, it may be necessary to add some supplemental hydrogen to adjust the overall hydrogen to carbon and oxygen proportions to the desired values prior to methanation. This supplemental hydrogen is conveniently and preferably added as molecular hydrogen. To calculate this, let:

$C_f$=gram atoms of carbon in mixture including that in the retained off-gas and in the added carbon source,

$O_f$=gram atoms of oxygen in mixture including that in the retained off-gas and in the added carbon source,

$H_f$=gram atoms of hydrogen in mixture including that in the retained gas and in the added carbon source,

$H_a$=gram atoms of additional hydrogen to be added as $H_2$ gas.

Then:

$$H_a=4C_f+2O_f-H_f.$$

It should be noted that it is not essential to maintain the exact stoichiometric ratios discussed above.

If we designate the quantity of $\Sigma 4[C]+2[O]$ as K, then broadly, the ratio of hydrogen atoms to K can range from about 0.9 to 1.3K and preferably from 0.95 to 1.1K.

Since both the hydrogenation of carbon-carbon bonds to methane and reduction of carbon-oxygen bonds to C—H and $H_2O$ are strongly favored thermodynamically, it is not necessary to use ratios of hydrogen to carbon, or hydrogen to oxygen, greatly in excess of the stoichiometric amounts indicated in the formula used for K. Indeed, large excesses of hydrogen interfere to some degree with the Andrussow process and should be avoided. Hydrogen itself is valuable; therefore, large excesses of hydrogen would represent a needless economic loss.

Low values of hydrogen, substantially less than 0.9K, should be avoided since there would be insufficient hydrogen present to convert all carbon compounds to methane. An unnecessary carbon yield loss would thereby result. Low hydrogen values are particularly bad if higher hydrocarbons are used as the supplementary carbon feed, due to the carburization problems which were discussed earlier.

An example of the calculation of K and of the appropriate adjustment of hydrogen to K using several possible supplementary carbon feeds is as follows:

A typical Andrussow feed and product stream representative of current practice is given in equation (1) where all quantities are given in moles:

Eq. (1) $$14NH_3+14CH_4+14O_2+56N_2 \xrightarrow[\text{Pt–Rh}]{1100°C} 9.1HCN+4.2CO+21H_2+0.7NH_3+22.4H_2O+58.1N_2+0.7CO_2$$

Prior to the invention, in the typical practice of the art, the $NH_3$ is selectively adsorbed and recycled, the hydrogen cyanide and $H_2O$ condensed and the hydrogen cyanide separated and the remaining stream of the composition:

$$4.2CO+21H_2+58.1N_2+0.7CO_2$$

burned as fuel. The hydrogen cyanide yield in this example based on methane is 65% and that based on $NH_3$ is 70%.

Using the process of the present invention, a small purge of 3.04 moles of product gas is burned as fuel. This removes the $N_2$ formed by $NH_3$ decomposition and gives a stream of the composition:

Eq. 1(A) $$4.05CO+20.24H_2+0.67CO_2+56N_2$$

If propane ($C_3H_8$) is the supplementary feedstock of choice, 3.09 moles of propane determined by $C_a=C_f-C_e$ and 0.79 moles of $H_2$ determined by $Ha=4C_f+2O_f-H_f$ is added and the mixture passed over a methanation catalyst according to

Eq. (2) $$4.05CO+21.03H_2+0.67CO_2+56N_2+3.09C_3H_8 \rightarrow 14CH_4+56N_2+5.39H_2O$$

After condensation and removal of $H_2O$, 14 moles of $NH_3$ and 14 moles of $O_2$ is added to reconstitute the original feed of $14CH_4+14NH_3+14O_2+56N_2$. Note that this procedure raises the $CH_4$ yield to 98.71% from 65%. Observe also that a plant could continue to run indefinitely using $CH_4$ as a reactant but with no outside supply of $CH_4$ as such. That is, the hydrocarbon needs for the synthesis would come solely from the added propane and the byproduct CO and $CO_2$, but the highly preferred $CH_4$ would still be the actual reactant at the time of synthesis.

Similar reactions using CO, $H_2$; $CH_3OH$, $C_2H_6$, and a $C_{10}H_{22}$ naphtha as alternative hydrocarbon feedstocks are shown in equations (3) through (6).

Eq. (3) $$13.33CO+0.67CO_2+42.67H_2+56N_2 \rightarrow 14CH_4+14.67H_2O+56N_2$$

To achieve this composition, 9.28 moles of CO and 22.43 moles of $H_2$ is added to the purged off-gas of Eq. 1(A). The water is condensed and 14 moles each of $NH_3$ and oxygen added as previously shown.

If methanol is the supplementary carbon source,

Eq. (4) $$4.05CO+9.28CH_3OH+0.67CO_2+42.67H_2+56N_2 \rightarrow 14CH_4+14.67H_2O+56N_2$$

To achieve the desired composition, 9.28 moles of $CH_3OH$ and 22.43 moles of $H_2$ is added to the purged off-gas from the Andrussow reaction. After being passed through the methanator, the $H_2O$ is condensed and $NH_3$ and $O_2$ added to reconstitute the desired feed.

Using ethane as a supplementary carbon source:

Eq. (5) $$4.05CO+0.67CO_2+20.24H_2+4.64C_2H_6+56N_2 \rightarrow 14CH_4+5.39H_2O+56N_2+0.77H_2$$

Using a $C_{10}H_{22}$ naphtha as a source:

Eq. (6) $$4.05CO+0.67CO_2+23.19H_2+0.928C_{10}H_{22}+56N_2 \rightarrow 14CH_4+5.39H_2O+56N_2$$

Note that the use of a hydrogen-rich supplemental carbon source such as ethane in Eq. (5) does not require the addition of supplemental $H_2$ as hydrogen gas. This is the reason for the appearance of a small excess of $H_2$ on the right-hand side of Eq. (5). The ratio of atoms of hydrogen to K in this instance is 1.02 which is within the permissible ranges.

The methanation step involves contacting the adjusted off-gas with a methanation catalyst. The catalyst will generally be a high surface area metal or supported metal from Group VIII of the periodic

table. These include Fe, Co, Ni, Ru, Rh, Pt, Os, Ir and Pd and their mixtures, with nickel being preferred. Supports include silica, alumina, alumina-silicates, titania, zirconia, zircon, silicon carbide, carbon and other refractory inert materials. When auxiliary carbon fluids include higher hydrocarbons such as naphtha, it is often advantageous to employ supports of an acidic character such as amorphous aluminasilicates and natural or synthetic zeolites. Such acidic supports assist the methanation process by cracking the hydrocarbon to a lower molecular weight.

The temperature range for methanation is from 220 to 490°C. At temperatures below 220°C, rates become undesirably slow and the preferred nickel catalysts are attacked by carbon monoxide to form volatile nickel carbonyls. Above 490°C, the catalysts tend to be thermally unstable towards sintering and grain growth of both the Group VIII metals and the supports. A temperature range from 280°C to 450°C is preferred.

The reaction is not particularly influenced by pressure, and pressures from 103 to 6890 k pascals (15 psi to 1000 psi) are operable. Since the Andrussow reaction is normally run at relatively low pressures, a pressure range from about 137 to 1370 k pascals (20 psi to 200 psi) is preferred.

Contact times depend upon many variable such as catalyst surface area, temperature, gas phase composition, loading of the Group VIII metals, the physical form of the catalyst, etc. Generally, they will range between $10^{-4}$ seconds and 10 seconds. Contact times of from $10^{-2}$ to 3 seconds are preferred.

A variety of types of catalyst beds can be employed such as fixed beds, fluidized beds, fixed beds with interstage cooling, etc. Fluidized beds and fixed beds with interstage cooling are preferred because of the exothermic nature of methanation reactions and the thermal instability of the catalysts above about 480°C.

Certain materials, as mentioned earlier, interfere with the methanation reaction by poisoning the catalyst. Thus, the feed gas to the methanator should not contain more than 1.5% benzene, 0.5 ppm of hydrogen disulfide, 2 ppm of mercaptans, 5% water, 20% carbon dioxide or 1% of ammonia, phenol or hydrogen cyanide.

The process of the invention can be run with partial recycle or total recycle. For partial recycle sufficient methane is available for feed to the hydrogen cyanide converter so that only a portion of the off-gases have to be utilized to bring the converter feed to capacity. Similarly, all of the off-gases can be recycled for methanation and additional methane added to the methanated off-gases to bring the converter feed to capacity. On the other hand, if methane is not available and the off-gases with a supplementary hydrocarbon feedstock are needed to provide methane to run the converter, additional hydrogen can be added to the off-gases if they do not contain sufficient hydrogen for the methanation reaction. In this latter event, methane can be used to start the process and then the process feed shifted to run on the off-gases and another hydrocarbon source.

The invention can be further understood by the following examples in which parts and percentages are on a molar basis unless otherwise indicated.

Since the Andrussow portion of the process of this invention does not differ appreciably from the conventional process, this and following examples will show only the methanation step of the invention.

Example 1

The catalyst used was a 56% by weight, reduced nickel on a Kiesulguhr (naturally occurring silica) support. The surface area was 125 square meters per gram and the pore volume was 0.18 cc/gram (41.5% by volume pores). The catalyst was in the form of 8—16 mesh pellets. Fifteen grams of catalyst were used in a 5-inch long by 3/8-inch diameter (12.7 cmx0.95 cm) cylindrical reactor immersed in a fluidized, thermostatically-controlled sand bath. The inlet flow of feed gases was approximately 300 cc/minute giving a superficial contact time with the catalysts of 0.77 seconds. Flows of all gaseous feeds were controlled by mas flow controllers. Liquids (e.g., methanol, naphtha) were fed by a liquid syringe pump. Concentrations of all compounds in both feed and product streams were determined by a gas chromatograph. In this example, an Andrussow exit gas stream containing 60 moles of $N_2$, 5 moles of CO, and 25 moles of $H_2$ was mixed with 10 moles of $CH_3OH$ as a supplemental carbon and hydrogen source. The exact analysis of the entering feed gas was 25.58% $H_2$, 11.33% $CH_3OH$, 57.52% $N_2$ and 5.57% CO. The reactor was maintained at 250°C. The exit gas contained 0% $H_2$, 13.04% $H_2O$, 0.03% $CH_3OH$, 67.28% $N_2$ and 19.64% $CH_4$. The analytical exit stream is somewhat lower in $H_2O$ and higher in $CH_4$ and $N_2$ than anticipated. This may have been caused by some condensation of $H_2O$ in the lines prior to analysis, thus increasing the apparent concentration of the gaseous components, $N_2$ and $CH_4$. This compares with an expected exit gas composition of 16.67% $H_2O$, 67.67% $N_2$ and 16.67% $CH_4$ assuming the intended feed or a composition of 16.68% $H_2O$, 64.41% $N_2$, 2.24% CO and 16.68% $CH_4$ assuming the analytical feed. In either event, essentially all CO and $CH_3OH$ were reduced and converted to methane. The $H_2O$ can be condensed, an appropriate amount of ammonia and oxygen added and the above methanated adjusted feed will be satisfactory feed for the Andrussow process.

Example 2

This is an example of the use of a mixture of methanol and propylene as supplementary feedstock

for an Andrussow process. As in Example 1 only the methanation step is included. The experimental equipment, catalyst and contact time used were the same as Example 1. The temperature used was 350°C. The analytical feed in percent to the methanator was as follows:

$$17.06H_2, 3.19C_3H_6, 4.63CH_3OH, 75.13N_2.$$

The expected exit gas composition in percent assuming complete methanation would be:

$$2.95H_2, 14.67CH_4, 4.78H_2O, 77.60N_2.$$

The observed composition in percent by analysis was:

$$1.05H_2, 18.59CH_4, 5.98H_2O, 74.37N_2.$$

Again it is clear that all $CH_3OH$ and propylene were converted to $CH_4$. It should be noted in this example, as well as the others, that the moles of exit gas do not equal the moles of gaseous feed so it is not possible to sum the percent carbon in the feed and have it equal to the percent carbon inthe exit gases. Since no propylene or unreacted methanol was detected in the exit gases, it is clear that, following condensation of water, this exit gas could be mixed with an appropriate amount of ammonia and oxygen to furnish a satisfactory feed for an Andrussow reaction.

Example 3 (best mode)

This is an example of the addition of naphtha to an Andrussow exit gas containing $H_2$, CO and $N_2$. As in Examples 1 and 2, only the methanation step is shown. The apparatus, catalyst and contact time is as described in Example 1 but the temperature is 400°C. The naphtha used was a fraction boiling between 115 and 120°C, having a density of 0.7691 g/cc at 25°C and having an analysis of 85.77% C and 14.30% $H_2$. This is almost exactly a 2/1 ratio of hydrogen to carbon atoms. The boiling point and density were consistent with a mixture of approximately eight carbon chain length cycloaliphatic and aliphatic hydrocarbons and olefins. For example:

| | | |
|---|---|---|
| methylcyclohexane | BP=101°C, | d=0.765 g/cc |
| ethylcyclohexane | BP=132°C, | d=0.784 g/cc |
| octane | BP=125.6°C, | d=0.698 g/cc |
| 1 octene | BP=121°C, | d=0.711 g/cc. |

Since the naphtha fraction was a complex mixture, and the molecular weight therefore not known exactly, a feed of approximately one volume percent in the gaseous phase was used but the precise feed depends on the actual molecular weight. Based on the average of feed gas analysis, the feed was:

| | |
|---|---|
| 1% | Naphtha |
| 24.63% | $H_2$ |
| 68.00% | $N_2$ |
| 7.19% | CO |

The average of 5 exit gas or product shots was:

| | |
|---|---|
| 17.27% | $CH_4$ |
| 81.46% | $N_2$ |
| 1.40% | $H_2O$. |

This checks well with the 17.86% $CH_4$ expected for 100% methanation assuming 1% of a $C_8H_{16}$ naphtha was fed. The $H_2O$ analysis is low, however. In any event, the absence of higher hydrocarbons and unreacted CO shows this would be a satisfactory Andrussow feed after condensation of $H_2O$ and addition of $NH_3$ and $O_2$.

**Claims**

1. A process for the manufacture of hydrogen cyanide by the Andrussow reaction wherein a feed of methane, ammonia and a source of oxygen is contacted with an oxidation catalyst in a reaction zone and hydrogen cyanide, water and unreacted ammonia are separated from the product gases to give waste off-gas, characterized by:—

(1) adjusting the atomic ratios of hydrogen, carbon and oxygen in the off-gas by the addition of a carbon-containing fluid and optionally hydrogen such that H equals 0.9—1.3 of the sum of 4(C)+2(O) where

H=gram atoms of hydrogen from all sources in the adjusted off-gas
C=gram atoms of carbon from all sources in the adjusted off-gas
O=gram atoms of oxygen from all sources in the adjusted off-gas;

(2) contacting the adjusted off-gas with a methanation catalyst so as to convert the carbon contained therein substantially completely to methane;
(3) condensing and removing water formed;
(4) mixing the methanated off-gas with ammonia, oxygen and additional methane, if needed, to reconstitute the original feed and passing the resulting gas to the reaction zone, the off-gas being purged periodically to avoid excessive build-up of nitrogen in the Andrussow reaction feed.

2. A process according to Claim 1, wherein the ratio H/K is between 0.95 and 1.1 with K being the sum of 4(C)+2(O).

3. A process according to Claim 1 or Claim 2 wherein the carbon-containing fluid is an oxide of carbon, a hydrocarbon or olefin containing 2 to 10 carbon atoms, an alkanol of 1 to 4 carbon atoms or a mixture thereof.

4. A process according to Claim 3, wherein the carbon-containing fluid is methanol or naphtha.

5. A process according to any one of the preceding claims wherein the methanation catalyst is a supported nickel catalyst.

6. A process according to any one of the preceding claims wherein the methanation reaction is carried out at a temperature from 220 to 490°C at a pressure from 103 to 6890 k pascals (15 to 1000 psi) and for a contact time of from $10^{-4}$ to 10 seconds.

**Patentansprüche**

1. Verfahren zur Herstellung von Cyanwasserstoff durch die Andrussow-Reaktion, bei dem eine Beschickung von Methan, Ammoniak und einer Sauerstoffquelle mit einem Oxidationskatalysator in einer Reaktionszone in Kontakt gebracht wird und Cyanwasserstoff, Wasser und nicht umgesetztes Ammoniak von den Produktgasen unter Bildung von Abfallgas abgetrennt werden, gekennzeichnet durch

(1) Einstellen der Atomverhältnisse von Wasserstoff, Kohlenstoff und Sauerstoff in dem Abgas durch Zusatz eines Kohlenstoff enthaltenden Fluids und gegebenenfalls von Wasserstoff derart, das H 0,9—1,3 der Summe von 4(C)+2(O) beträgt, worin

H=die Grammatome von Wasserstoff aus allen Quellen in dem eingestellten Abgas,
C=die Grammatome an Kohlenstoff aus allen Quellen in dem eingestellten Abgas,
O=die Grammatome an Sauerstoff aus allen Quellen in dem eingestellten Abgas;

(2) Kontakt des eingestellten Abgases mit einem Methanierungskatalysator, um den darin enthaltenen Kohlenstoff im wesentlichen vollständig in Methan umzuwandeln;
(3) kondensieren und Entfernen des gebildeten Wassers;
(4) Vermischen des methanierten Abgases mit Ammoniak, Sauerstoff und zusätzlichem Methan, falls notwendig, zur Wiederherstellung der ursprünglichen Beschickung und Leiten des resultierenden Gases zu der Reaktionszone, wobei das Abgas periodisch gespült wird, um eine übermässige Ansammlung von Stickstoff in der Andrussow-Reaktionsbeschickung zu vermeiden.

2. Verfahren nach Anspruch 1, bei dem das Verhältnis H/K zwischen 0,95 und 1,1 liegt, wobei K die Summe von 4(C)+2(O) ist.

3. Verfahren nach Anspruch 1 oder Anspruch 2, bei dem das Kohlenstoff enthaltende Fluid ein Oxid von Kohlenstoff, ein Kohlenwasserstoff oder Olefin mit 2 bis 10 Kohlenstoffatomen, ein Alkanol mit 1 bis 4 Kohlenstoffatomen oder ein Gemisch davon ist.

4. Verfahren nach Anspruch 3, bei dem das Kohlenstoff enthaltende Fluid Methanol oder Naphtha ist.

5. Verfahren nach einem der vorhergehenden Ansprüche, bei dem der Methanierungskatalysator ein Nickelkatalysator mit Träger ist.

6. Verfahren nach einem der vorhergehenden Ansprüche, bei dem die Methanierungsreaktion bei einer Temperatur von 220 bis 490°C bie einem Druck von 103 bis 6890 k Pascal (15 bis 1000 psi) und während einer Kontaktzeit von $10^{-4}$ bis 10 Sekunden durchgeführt wird.

**Revendications**

1. Un procédé de préparation de cyanure d'hydrogène par la réaction d'Andrussow dans lequel une alimentation de méthane, d'ammoniac et d'une source d'oxygène est mise en contact avec un catalyseur d'oxydation dans une zone de réaction, et du cyanure d'hydrogène, de l'eau et de l'ammoniac n'ayant pas réagi sont séparés des gaz produits pour donner un gaz d'échappement résiduel, caractérisé en ce que:

1) on ajuste les rapports atomiques d'hydrogène, de carbone et d'oxygène dans le gaz d'échappement par l'addition d'un fluide contenant du carbone et facultativement d'hydrogène de façon que H soit égal à 0,9 à 1,3 fois la somme 4(C)+2(O), où

H=atomes-grammes d'hydrogène provenant de toutes les sources dans le gaz d'échappement ajusté,

C=atomes-grammes de carbone provenant de toutes les sources dans le gaz d'échappement ajusté,

O=atomes-grammes d'oxygène provenant de toutes les sources dans le gaz d'échappement ajusté;

2) on met en contact le gaz d'échappement ajusté avec un catalyseur de méthanation de façon à convertir le carbone présent substantiellement complètement en méthane;

3) on condense et on élimine l'eau formée;

4) on mélange le gaz d'échappement méthané avec de l'ammoniac, de l'oxygène et du méthane additionnel, si besoin est, pour reconstituer l'alimentation d'origine et on fait passer le gaz résultant dans la zone de réaction, le gaz d'échappement étant purgé périodiquement pour éviter une accumulation excessive d'azote dans l'alimentation de la réaction d'Andrussow.

2. Un procédé selon la revendication 1, dans lequel le rapport H/K est comprise entre 0,95 et 1,1, où K est la somme 4(C)+2(O).

3. Un procédé selon la revendication 1 ou 2, dans lequel le fluide contenant du carbone est un oxyde de carbone, un hydrocarbure ou une oléfine contenant 2 à 10 atomes de carbone, un alcanol de 1 à 4 atomes de carbone ou un mélange de ceux-ci.

4. Un procédé selon la revendication 3, dans lequel le fluide conteant du carbone est du méthanol ou du naphta.

5. Un procédé selon l'une quelconque des revendications précédentes, dans lequel le catalyseur de méthanation est un catalyseur à base de nickel sur support.

6. Un procédé selon l'une quelconque des revendications précédentes, dans lequel la réaction de méthanation est effectuée à une température de 220 à 490°C, sous une pression de 103 à 6890 kilopascals et pendant un temps de contact de $10^{-4}$ à 10 secondes.